Europäisches Patentamt

European Patent Office

Office européen des brevets

(11) Veröffentlichungsnummer: **0 378 121**

**A2**

(12) **EUROPÄISCHE PATENTANMELDUNG**

(21) Anmeldenummer: **90100187.5**

(22) Anmeldetag: **05.01.90**

(51) Int. Cl.⁵: **G06F 3/023**

(30) Priorität: **13.01.89 DE 3900806**

(43) Veröffentlichungstag der Anmeldung:
**18.07.90 Patentblatt 90/29**

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Nutz, Werner**
**Mannheimer Strasse 27**
**D-7730 Willingen-Schwenningen(DE)**
Erfinder: **Hake, Martin**
**Konstanzer Strasse 39**
**D-7730 Villingen-Schwenningen(DE)**

(54) **Benutzerhilfe für Geräte der Unterhaltungselektronik.**

(57) Derartige Geräte sind meist mit einem alphanumerischen, elektronischen Display ausgestattet, auf welchem Funktionen, Abläufe und/oder Zustände angezeigt werden. Dabei werden oft Abkürzungen verwendet, Symbole dargestellt oder englische Begriffe verwendet. Der Benutzer des Gerätes kann sich nur mittels der Bedienungsanleitung mit dem Gerät vertraut machen. Für die Ausstattung von Spitzengeräten wird gefordert, das ist die durch die Erfindung zu lösende Aufgabe, daß eine Benutzerhilfe oder -führung angeboten wird.

Nach der Erfindung ist eine Benutzerhilfe-Taste und ein Speicher vorgesehen, die es dem Benutzer ermöglichen erklärende Informationen unterschiedlicher Art anzufordern durch Abruf mittels dieser Taste und Darstellung auf dem Display.

Anwendung bei Spitzen-Modellen der jeweiligen Geräteart wie HiFi-tuner, -Verstärker und CD-Geräten.

Anmeldung enthält keine Zeichnung.

## Benutzerhilfe für Geräte der Unterhaltungselektronik

Die Erfindung betrifft ein Gerät der Unterhaltungselektronik nach dem Oberbegriff des ersten Anspruchs.

Alphanumerische, elektronische Anzeigeeinrichtungen werden bereits seit einiger Zeit bei Geräten der Unterhaltungselektronik verwendet, um Funktionen, Abläufe und Zustände anzuzeigen. Man spricht dabei von einem Display. Da derartige Geräte in zunehmendem Maß vielseitiger, komfortabler, aufwendiger und dadurch komplizierter werden, lassen sich Abkürzungen und Symbole bei den unterschiedlichen Anzeigen nicht vermeiden. Dadurch wird dem Benutzer in vielen Fällen zugemutet, daß er sich die Bedeutung der Anzeigen und die Bedienung seines Gerätes an hand der Bedienungsanleitung einprägen muß.

Der vorliegenden Erfindung lag die Aufgabe zugrunde, die Benutzer solcher Geräte bei der Bedienung zu führen oder zu unterstützen, damit der Benutzer zweifelsfrei und ohne in der Bedienungsanleitung wiederholt nachsehen zu müssen mit seinem Gerät umgehen kann.

Das wird nach Anspruch 1 erreicht, indem eine Benutzerhilfe-Taste und ein Speicher vorgesehen sind, die es dem Benutzer des Gerätes ermöglichen, zusätzliche Informationen, Erklärungen und Hilfen zum besseren Verständnis des Gerätes über das Display durch Betätigung dieser Taste abzurufen oder anzufordern, die in dem Speicher bereitgestellt sind.

Weitere Einzelheiten und Ausgestaltungen sind den übrigen Ansprüchen zu entnehmen.

Es sind wahlweise abrufbare Informationen verschiedener Art vorteilhaft wie etwa eine ausführliche Wiedergabe eines abgekürzten Begriffes, ein deutsches Wort für einen englischen Fachbegriff oder die Erklärung eines Symbols. Es kann dem Benutzer auch angezeigt werden, was er nachfolgend oder gegebenenfalls wahlweise tun sollte. Auf Anfrage über die Taste kann schließlich der aktuelle bzw. momentane Stand bzw. zustand auf dem Display sichtbar gemacht werden.

Für den Fall, daß Informationen wiedergegeben werden sollen, die mehr Anzeigestellen verlangen als auf einer Anzeigeeinrichtung vorhanden sind, ist es möglich durch die Verwendung von Laufschrift, z.B. mit sogenannter "Scrol-Mode", die Information durchzuschieben. Durch Wiederholung des Abrufs ist es dem Benutzer möglich dafür zu sorgen, daß er die Information richtig versteht.

Wenn für eine Betriebsart oder Funktion mehrere Anzeigetexte möglich sind, kann eine mehrfache Tastenbetätigung oder eine gleichzeitige oder nachfolgende Bedienung eines Endloshandrades (sogenannter "Handrad-Encoder") zur Anwahl bzw.

Einstellung verwendet werden.

Die angegebenen Problemlösungen kommen in erster Linie für Spitzen-Modelle in Frage, die die aufwendigste Ausstattung haben.

### Ansprüche

1. Gerät der Unterhaltungselektronik mit einer alphanumerischen, elektronischen Anzeigeeinrichtung für die Anzeige von Gerätefunktionen, -abläufen und/oder -zuständen, einem sogenannten Display, **dadurch gekennzeichnet**, daß eine Benutzerhilfe-Taste und ein Speicher vorgesehen sind, die es dem Benutzer des Gerätes ermöglichen, zusätzliche Informationen, Erklärungen und Hilfen zum besseren Verständnis der Funktionen des Gerätes über das Display durch Betätigung dieser Taste abzurufen oder anzufordern, die in dem Speicher bereitgestellt sind.

2. Gerät nach Anspruch 1, **dadurch gekennzeichnet**, daß die wahlweise abrufbaren Informationen betreffen:

a) Die ausführliche Wiedergabe einer abgekürzten Anzeige;

b) Dem Benuzter wird angezeigt, was er nachfolgend und gegebenenfalls wahlweise tun sollte;

c) Dem Benutzer wird der aktuelle bzw. momentane Stand bzw. Zustand angezeigt.

d) Er kann z.B. eine Programmfolge schrittweise oder ausschnittweise anschauen;

e) Die aktuelle Anzeige in eine andere Sprache übersetzt ist.

3. Gerät gemäß Anspruch 1 oder 2, **dadurch gekennzeichnet**, daß auch Informationen, die mehr Anzeigestellen verlangen als auf einer Anzeigeeinrichtung vorhanden sind, wiedergegeben werden sollen, durch Verwendung einer Laufschrift, z.B. sogenannter "Scrol-Mode", durchgeschoben werden und so verständlich gemacht werden.

4. Gerät gemäß Anspruch 1 oder 2, **dadurch gekennzeichnet**, daß für den Fall, daß mehrere Anzeigetexte möglich sind, eine mehrfache Tastenbetätigung oder eine gleichzeitige oder nachfolgende Betätigung eines Endloshandrades (sog. "Handrad-encoder") zur Anwahl bzw. Einstellung (hin- und herschieben des Textes im Display) Verwendung finden.